(19) Europäisches Patentamt / European Patent Office / Office européen des brevets

(11) **EP 3 016 063 A1**

(12) **EUROPEAN PATENT APPLICATION**

(43) Date of publication:
**04.05.2016 Bulletin 2016/18**

(51) Int Cl.:
***G06T 1/00*** *(2006.01)*

(21) Application number: **14306757.7**

(22) Date of filing: **03.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventor: **Theis, Oliver
32689 Kalletal (DE)**

(74) Representative: **Hartnack, Wolfgang
Deutsche Thomson OHG
European Patent Operations
Karl-Wiechert-Allee 74
30625 Hannover (DE)**

(54) **Method and apparatus for imprinting, using a mask, picture content within an original image without changing the y value of pixels affected by said imprinting**

(57)    Although imprints represent only a minor change of image information for a human observer, they largely affect the image content in a technical sense, e.g. content fingerprints. The invention marks using a mask $M$ picture content within an original image $X$ without changing the Y value of pixels, of which the red, green and blue values are denoted $X'_r$, $X'_g$ and $X'_b$. For each pixel in image $X'$ the following steps are carried out: (A) transferring part of source $X'_g$ to destination $X'_b$, (B) transferring part of source $X'_g$ to destination $X'_r$, (C) transferring part of source $X'_r$ to destination $X'_b$. In steps (A) to (C) the following substeps are carried out, in which $i$ represents the source colour, $j$ represents the destination colour, $i$ = R, G or B, $j$ = R, G or B, and $i \neq j$: determining a destination spare capacity $c_j = 1 - X'_j$, setting a weight ratio $r = \dfrac{w_i}{w_j}$, setting a transfer value $t = min(c_j, X'_j)$ subtracting a weighted transfer value from the source by

$$X'_i = X'_i - \frac{t}{r},$$ adding the transfer value $t$ to the destination by $X'_j = X'_j + t$. Finally, images $X$ and $X'$ are mixed such that the marked image $Z$ is $Z = (1 - M)X + MX'$.

Fig. 6

**Description**

Technical field

The invention relates to a method and to an apparatus for imprinting, using a mask, picture content within an original image without changing the Y value of pixels affected by said imprinting, wherein the Y value of a pixel is the sum of weighted R, G and B values of that pixel using predetermined standard weight values.

Background

During digital film production workflow, (low quality-) proxies with metadata imprints like time-code and take number are generated. Varying metadata is generated together with the video footage on different scales of time, i.e. frame, take, shot, scene. In postproduction, additional metadata may be generated like quality measures.

Although picture and video file formats usually provide means for storing some metadata together with image content, the subset is rather limited and propagation of metadata from one format to the other during postproduction usually involves loss of information. Therefore metadata is usually stored in separate files like XML, PDF, CSV, and is added to a database or file system for indexing, searching and editing. This means that productions end up with multiple versions of the same, similar, or slightly or heavily modified content on one side and a database of metadata on the other side. The solution for connecting both sides during production is a mixture of time-codes, file-naming, folder-structure and working knowledge.

The above-mentioned proxies are part of the content stock, and linking with metadata is desired. Proxies may be used to link content and metadata during the initial key-pair generation processing.

Although imprints usually represent only a minor change of image information for a human observer, they largely affect the image content in a technical sense. This means that content fingerprints are modified in a way that matching with other copies will become difficult.

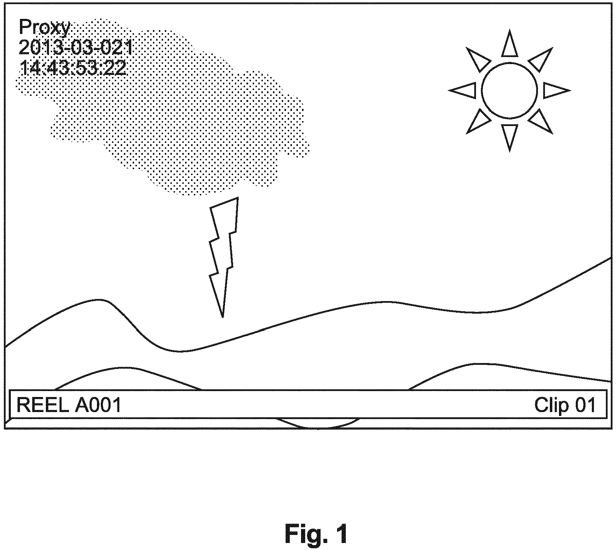

Fig. 1 shows a typical example of how imprinting is usually performed.

Summary of invention

A problem to be solved by the invention is to generate imprints that do not affect image fingerprints. This problem is solved by the method disclosed in claim 1 or 2. An apparatus that utilises this method is disclosed in claim 3 or 4.

Advantageous additional embodiments of the invention are disclosed in the respective dependent claims.

Regarding the invention, it is assumed that such fingerprint generation (e.g. by using a hash value for each video data frame) is based on a single-channel representation of a colour (RGB) image, i.e. a grey level image. According to the invention, the textual information or other information is not encoded in the luminance information of the video data, but instead is encoded in the colour information only. Thereby it is hidden from the single-channel grey level image fingerprint generation processing.

A disadvantage is that the processing can be used only in non-black and non-white image regions, but it works for the much more frequently occurring grey level image regions. I.e., the readability of textual imprints depends on the image content. The same is true for the signal-to-noise ratio of other information.

The described processing decouples the problem of content linking from imprint generation, i.e. it allows matching proxies with imprints to other copies.

In principle, the inventive method is suited for imprinting, using a mask $M$, picture content within an original image $X$ by changing R, G and B values of corresponding pixels affected by said imprinting without changing the Y value of these pixels,

wherein the Y value of a pixel in said original image is the sum of weighted R, G and B values of that pixel using predetermined standard weight values $w_i$,

and wherein said Y, R, G and B values are normalised in a predetermined value range MIN...MAX, and the normalised red, green and blue values of said affected pixels are denoted for each pixel as $X'_r$, $X'_g$ and $X'_b$, respectively, in an image $X'$ which is initially a copy of image $X$,

and wherein $X''$ and $X'''$ are also copies of image $X$ and for each affected pixel in images $X'$, $X''$ and $X'''$ the following processing is carried out:

(A) checking transfer from source $X'_g$ to destination $X'_b$;

(B) checking transfer from source $X'_g$ to destination $X'_r$;

(C) checking swap between $X'_r$ and $X'_b$ and, if possible, transfer from $X''_r$ to $X''_b$ and from $X'''_b$ to $X'''_r$ ;

(D) set $X' = X'' + X''' - X'$;

(E) mixing $X$ and $X'$ according to M such that $Z = (1 - M)X + MX'$, or $Z = MX + (1-M)X'$,

wherein for each one of steps (A), (B) and (C) the following processing is carried out, where $i$ represents the source colour, $j$ represents the destination colour, $i$ = R, G or B, $j$ = R, G or B, and $i \neq j$ :

(a) determining a destination spare capacity $sc_j = 1 - X'_j$ ;

(b) setting a weight ratio $wr = \dfrac{w_i}{w_j}$ ;

(c) setting a transfer value $tv = min(sc_j, X'_j)$ ;

(d) subtracting a weighted transfer value from

the source by $X'_i = X'_i - \dfrac{tv}{wr}$ ;

(e) adding said transfer value *tv* to the destination by $X'_j = X'_j + tv$.

In principle the inventive apparatus is suited for imprinting, using a mask *M*, picture content within an original image *X* by changing R, G and B values of corresponding pixels affected by said imprinting without changing the Y value of these pixels,
wherein the Y value of a pixel in said original image is the sum of weighted R, G and B values of that pixel using predetermined standard weight values $w_i$,
and wherein said Y, R, G and B values are normalised in a predetermined value range MIN...MAX, and the normalised red, green and blue values of said affected pixels are denoted for each pixel as $X'_r$, $X'_g$ and $X'_b$, respectively, in an image *X'* which is initially a copy of image *X,*
and wherein *X''* and *X'''* are also copies of image *X,*
and wherein said apparatus includes:

- calculation means which carry out for each affected pixel in images *X', X''* and *X'''* the following processing:

    (A) checking transfer from source $X'_g$ to destination $X'_b$;
    (B) checking transfer from source $X'_g$ to destination $X'_r$;
    (C) checking swap between $X'_r$ and $X'_b$ and, if possible, transfer from $X''_r$ to $X''_b$ and from $X'''_b$ to $X'''_r$ ;
    (D) set $X' = X'' + X''' - X'$;
    (E) mixing *X* and *X'* according to *M* such that $Z = (1 - M)X + MX'$, or $Z = MX + (1-M)X'$,

wherein for each one of steps (A), (B) and (C) the following processing is carried out, where *i* represents the source colour, *j* represents the destination colour, *i* = R, G or B, *j* = R, G or B, and $i \neq j$ :

    (a) determining a destination spare capacity $sc_j = 1 - X'_j$ ;

    (b) setting a weight ratio $wr = \dfrac{w_i}{w_j}$ ;

    (c) setting a transfer value $tv = min(sc_j, X'_j)$ ;
    (d) subtracting a weighted transfer value from

    the source by $X'_i = X'_i - \dfrac{tv}{wr}$ ;

    (e) adding said transfer value *tv* to the destination by $X'_j = X'_j + tv$.

Brief description of drawings

Exemplary embodiments of the invention are described with reference to the accompanying drawings, which show in:

Fig. 1    example of how imprinting is performed in a known manner;
Fig. 2    example image *X*;
Fig. 3    example mask *M*;
Fig. 4    U component of the resulting image *Z*;
Fig. 5    V component of the resulting image *Z*;
Fig. 6    block diagram for the processing.

Description of embodiments

Even if not explicitly described, the following embodiments may be employed in any combination or sub-combination.
It is assumed that a normalised colour image *X* having values in the range of [0,...,1] is transformed into a grey-level representation *Y* by computing a weighted sum of its colour components red, green and blue:

$$Y = w_r X_r + w_g X_g + w_b X_b$$

For example, the CCIR Rec.601 SDTV standard sets weight vector $\boldsymbol{w} = [w_r\ w_g\ w_b]$ for computing the *Y* component to

$$\boldsymbol{w} = [0.2990\ \ 0.5870\ \ 0.1140]\ \ ,$$

and CCIR Rec.709 HDTV sets the weighting factors in vector $\boldsymbol{w}$ to $\boldsymbol{w}$ = [0.2125 **0.7154 0.0721**] .
In the inventive processing, textual or modulated binary information is added to *X* without changing *Y,* by shifting information (i.e. energy) between red, green and blue channels such that their weighted sum remains constant and the resulting grey level for each pixel is kept. This shifting information can be available in a binary or multi-level **[0,...,1]** mask *M* having the same size as *Y*, or having a smaller size together with corresponding position information.
Because the blue channel has the smallest standard weight, in many cases energy can be shifted into blue from red and green. This is used in the following sequential processing for encoding (e.g. characters or a pattern) *M* into image *X,* in order to get a new RGB image *Z* for which $Y_x = Y_z$ holds for each pixel element:

    (A) Copy *X* to *X'*, i.e. *X' = X*
    (B) If possible, transfer (part of) $X'_g$ to $X'_b$
    (C) If possible, transfer (part of) $X'_g$ to $X'_r$
    (D) If possible, swap (part of) $X'_r$ and $X'_b$
    (E) Mix *X* and *X'* according to M such that $Z = (1 - M)X + MX'$.
    In a different embodiment, $Z = MX + (1 - M)X'$.

For the swap in (D) the following is carried out:

(D1) Copy *X'* (or *X*) to *X"* and *X'"*, i.e. *X"* = *X'* and *X'"* = *X'*.

(D2) Transfer (part of) $X''_r$ to $X''_b$ and (part of) $X'''_b$ to $X'''_r$ ;

(D3) *X'* = *X"* + *X'"*-*X'*.

In the following, colour channel *i* is R, G or B, and colour channel *j* is R, G or B and is different from *i*. For each corresponding pixel, transferring energy from a source channel representing colour *i* to a destination channel representing colour *j* for corresponding given weight values w is done in the following way in the above transfer steps (B), (C) and (D2) :

(a) Determine a destination channel capacity or image spare capacity $c_j = 1 - X'_j$ ;

(b) Set a channel weight ratio $r = \dfrac{w_i}{w_j}$ ;

(c) Set a channel transfer value $t = min(c_j, X'_j)$;

(d) Subtract a weighted transfer value from the source channel: $X'_i = X'_i - \dfrac{t}{r}$ ;

(e) Add the channel transfer value *t* to the destination channel: $X'_j = X'_j + t$.

I.e., when taking part of a source channel pixel colour value and adding a related part to the corresponding destination channel pixel colour value, the differing weight values in the colour channels are taken into consideration (by the channel weight ratio *r*), so that the resulting pixel luminance value in image *X'* does not change with respect to the corresponding pixel luminance value in image *X*.

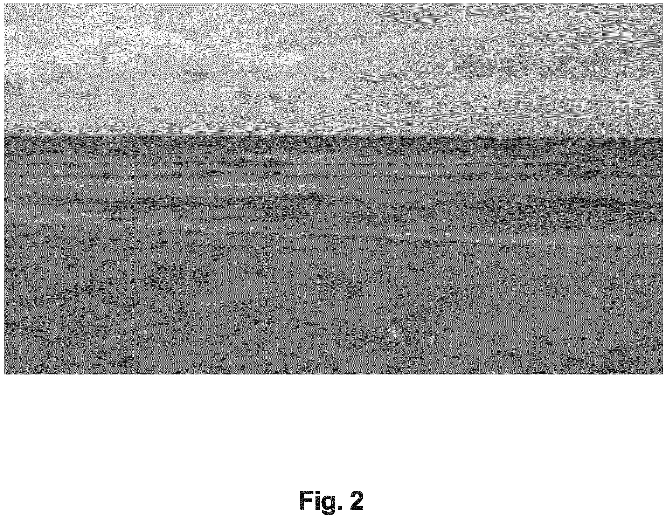

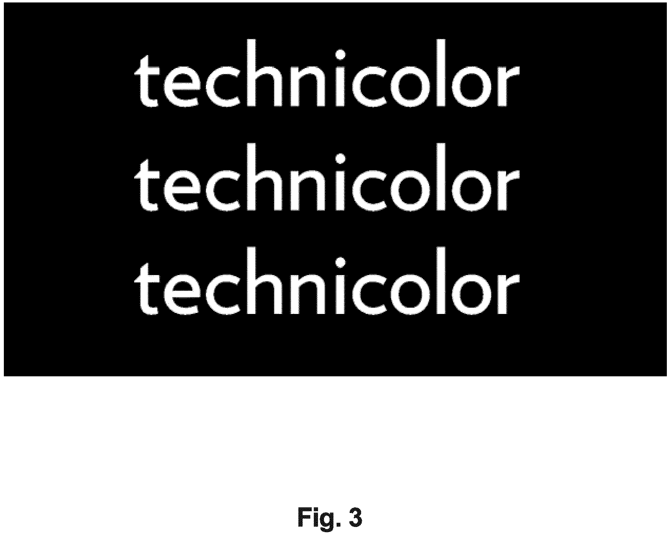

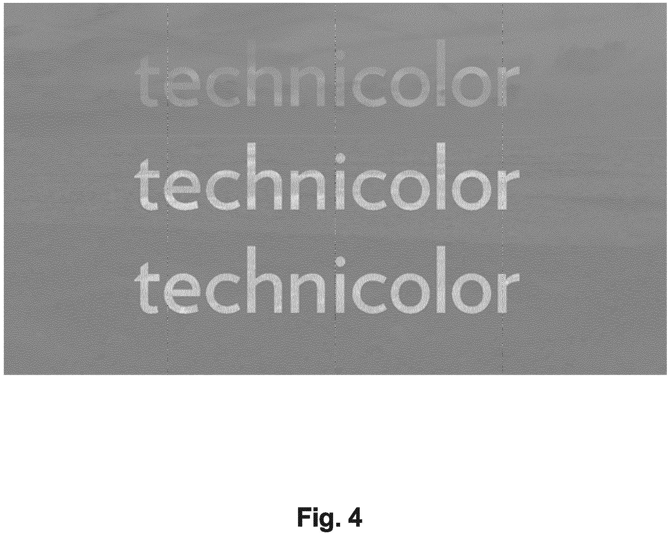

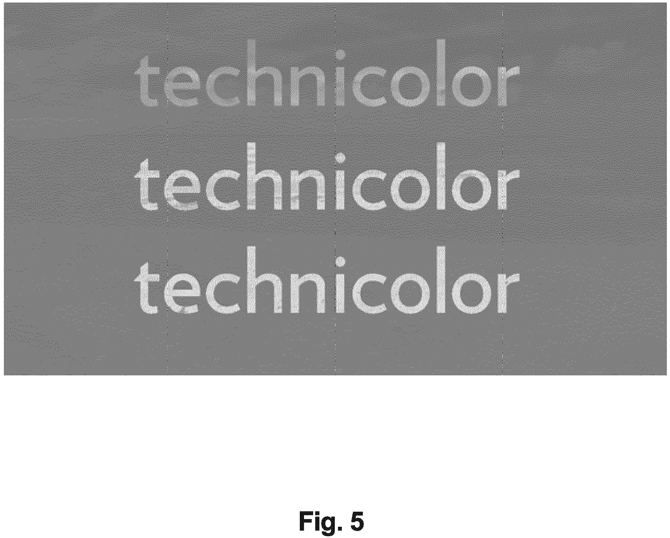

Fig. 2 shows an example image *X,* Fig. 3 shows an example mask *M*, Fig. 4 shows the U component of the resulting image *Z*, and Fig. 5 shows the V component of the resulting image *Z*. Without colour allowed in the drawings of patent applications, image *Z* looks like image *X* and is therefore omitted.

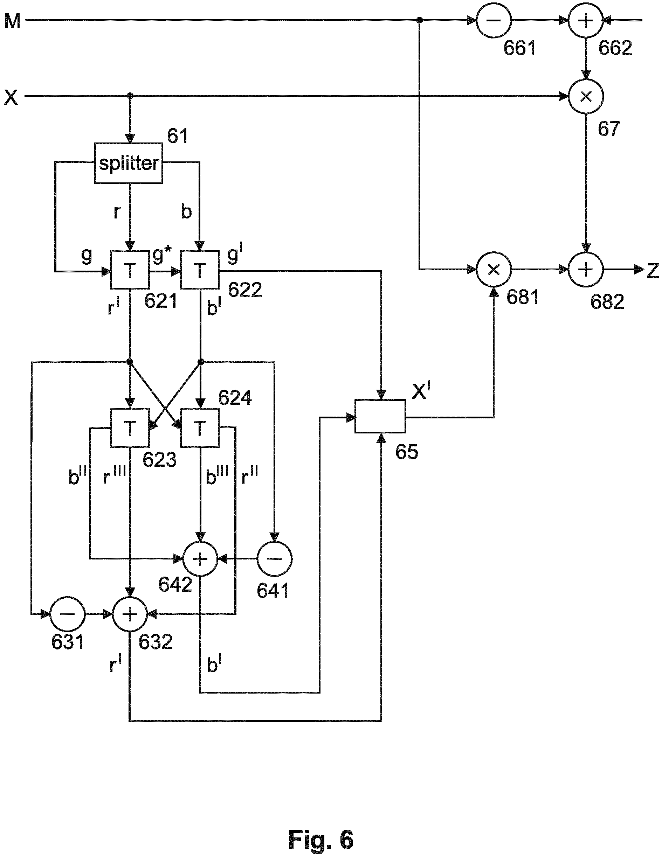

In Fig. 6, mask *M* is subtracted from '1', e.g. by using sign inverter 661 and adder 662. The result is multiplied by *X* in a multiplier 67. *X'* is multiplied by *M* in a multiplier 681 and the result is combined with the result of multiplier 67 in an adder 682 which outputs *Z*.

A splitter 61 copies *X* to *X'* and provides the $X'_r$, $X'_g$ and $X'_b$ values of the current pixel, denoted *r, g* and *b* in Fig. 6. Block 621 represents transfer (B) with steps (a) to (e) and block 622 represents transfer (C) with steps (a) to (e). Block 621 outputs *r'* which may include part of *g*, and feeds a version *g\** of *g* from which that part is removed to block 622. Block 622 outputs *b'* which may include a further part of *g* taken from *g\**, and feeds the remaining *g'* to a first input of block 65.

The copy operations (D1) are not depicted in Fig. 6.

Each one of blocks 623 and 624 receives *r'* and *b'* and carries out steps (a) to (e) in parallel. Block 623 outputs b" and *r'"*, while block 624 outputs *b'"* and *r".*

Adder 632 combines *r'* sign inverted in block 631 with *r'"* and *r",* and outputs the correspondingly adapted *r'* to a second input of block 65.

Adder 642 combines *b'* sign inverted in block 641 with *b'"* and b", and outputs the correspondingly adapted *b'* to a third input of block 65.

Block 65 composes the final *r'*, *b'* and *g'* values, and outputs *X'*.

The invention can be applied for perceptual, visual, robust or soft hashing, for content based image retrieval, for video fingerprinting, for content identification and for video imprinting.

The invention may also be applied to other image processing problems that work on a single channel representation of an

RGB image and that require adding textual or modulated digital information.

The described processing can be carried out by a single processor or electronic circuit, or by several processors or electronic circuits operating in parallel and/or operating on different parts of the complete processing.

The instructions for operating the processor or the processors according to the described processing can be stored in one or more memories. The at least one processor is configured to carry out these instructions.

**Claims**

1. Method for imprinting, using a mask (M), picture content within an original image (*X*) by changing R, G and B values of corresponding pixels affected by said imprinting without changing the Y value of these pixels,

   wherein the Y value of a pixel in said original image is the sum of weighted R, G and B values of that pixel using predetermined standard weight values ($w_i$).

2. Method for imprinting, using a mask M, picture content within an original image *X* by changing R, G and B values of corresponding pixels affected by said imprinting without changing the Y value of these pixels,

   wherein the Y value of a pixel in said original image is the sum of weighted R, G and B values of that pixel using predetermined standard weight values $w_i$,

   and wherein said Y, R, G and B values are normalised in a predetermined value range MIN...MAX, and the normalised red, green and blue values of said affected pixels are denoted for each pixel as $X'_r$, $X'_g$ and $X'_b$, respectively, in an image *X'* which is initially a copy of image *X,*

   and wherein *X"* and *X'"* are also copies of image *X* and for each affected pixel in images *X', X"* and *X'"*

the following processing is carried out:

> (A) checking (621) transfer from source $X'_g$ to destination $X'_b$;
> (B) checking (622) transfer from source $X'_g$ to destination $X'_r$;
> (C) checking (623, 624, 631, 632, 641, 642) swap between $X'_r$ and $X'_b$ and, if possible, transfer from $X'''_r$ to $X''_b$ and from $X'''_b$ to $X'''_r$;
> (D) set $X' = X'' + X'''-X$;
> (E) mixing (661, 662, 67, 681, 682) $X$ and $X'$ according to M such that $Z = (1 - M)X + MX'$,

wherein for each one of steps (A), (B) and (C) the following processing is carried out, where $i$ represents the source *colour*, $j$ represents the destination colour, $i$ = R, G or B, $j$ = R, G or B, and $i \neq j$:

> (a) determining a destination spare capacity $sc_j$ = 1 - $X'_j$;
> (b) setting a weight ratio $wr = \dfrac{w_i}{w_j}$;
> (c) setting a transfer value $tv = min(sc_j, X'_j)$;
> (d) subtracting a weighted transfer value from the source by $X'_i = X'_i - \dfrac{tv}{wr}$;
> (e) adding said transfer value $tv$ to the destination by $X'_j = X'_j + tv$.

**3.** Method for imprinting, using a mask *M*, picture content within an original image *X* by changing R, G and B values of corresponding pixels affected by said imprinting without changing the Y value of these pixels,
wherein the Y value of a pixel in said original image is the sum of weighted R, G and B values of that pixel using predetermined standard weight values $w_i$,
and wherein said Y, R, G and B values are normalised in a predetermined value range MIN...MAX, and the normalised red, green and blue values of said affected pixels are denoted for each pixel as $X'_r$, $X'_g$ and $X'_b$, respectively, in an image *X'* which is initially a copy of image *X,* and wherein *X''* and *X'''* are also copies of image *X* and for each affected pixel in images *X', X''* and *X'''* the following processing is carried out:

> (A) checking (621) transfer from source $X'_g$ to destination $X'_b$;
> (B) checking (622) transfer from source $X'_g$ to destination $X'_r$;
> (C) checking (623, 624, 631, 632, 641, 642) swap between $X'_r$ and $X'_b$ and, if possible, transfer from $X''_r$ to $X''_b$ and from $X'''_b$ to $X'''_r$;
> (D) set $X' = X'' + X'''-X$;
> (E) mixing (661, 662, 67, 681, 682) $X$ and $X'$

according to *M* such that $Z = MX + (1 - M)X'$,

wherein for each one of steps (A), (B) and (C) the following processing is carried out, where $i$ represents the source *colour*, $j$ represents the destination colour, $i$ = R, G or B, $j$ = R, G or B, and $i \neq j$:

> (a) determining a destination spare capacity $sc_j$ = 1 - $X'_j$;
> (b) setting a weight ratio $wr = \dfrac{w_i}{w_j}$;
> (c) setting a transfer value $tv = min(sc_j, X'_j)$;
> (d) subtracting a weighted transfer value from the source by $X'_i = X'_i - \dfrac{tv}{wr}$;
> (e) adding said transfer value $tv$ to the destination by $X'_j = X'_j + tv$.

**4.** Method according to claim 2 or 3, wherein MIN=0 and MAX=1.

**5.** Method according to one of claims 2 to 4, wherein said predetermined standard weight values $w_i$ are CCIR Rec.601 or CCIR Rec.709 weight values.

**6.** Apparatus for imprinting, using a mask (*M*), picture content within an original image (*X*) by changing R, G and B values of corresponding pixels affected by said imprinting without changing the Y value of these pixels, wherein the Y value of a pixel in said original image is the sum of weighted R, G and B values of that pixel using predetermined standard weight values (*$w_i$*).

**7.** Apparatus for imprinting, using a mask *M*, picture content within an original image *X* by changing R, G and B values of corresponding pixels affected by said imprinting without changing the Y value of these pixels,
wherein the Y value of a pixel in said original image is the sum of weighted R, G and B values of that pixel using predetermined standard weight values $w_i$,
and wherein said Y, R, G and B values are normalised in a predetermined value range MIN...MAX, and the normalised red, green and blue values of said affected pixels are denoted for each pixel as $X'_r$, $X'_g$ and $X'_b$, respectively, in an image *X'* which is initially a copy of image *X,*
and wherein *X''* and *X'''* are also copies of image *X,*
and wherein said apparatus includes:

> - calculation means (61, 621-624, 631, 632, 641, 642, 65, 661, 662, 67,681,682) which carry out for each affected pixel in images *X', X''* and *X'''* the following processing:

(A) checking transfer from source $X'_g$ to destination $X'_b$;
(B) checking transfer from source $X'_g$ to destination $X'_r$;
(C) checking swap between $X'_r$ and $X'_b$ and, if possible, transfer from $X''_r$ to $X''_b$ and from $X'''_b$ to $X'''_r$;
(D) set $X' = X'' + X'''-X'$;
(E) mixing $X$ and $X'$ according to $M$ such that $Z = (1 - M)X + MX'$, wherein for each one of steps (A), (B) and (C) the following processing is carried out, where $i$ represents the source *colour*, $j$ represents the destination colour, $i$ = R, G or B, $j$ = R, G or B, and $i \neq j$ :

(a) determining a destination spare capacity $sc_j = 1 - X'_j$ ;
(b) setting a weight ratio

$$wr = \frac{w_i}{w_j} \ ;$$

(c) setting a transfer value $tv = min(sc_j, X'_j)$ ;
(d) subtracting a weighted transfer value from the source by

$$X'_i = X'_i - \frac{tv}{wr} \ ;$$

(e) adding said transfer value $tv$ to the destination by $X'_j = X'_j + tv$.

8. Apparatus for imprinting, using a mask $M$, picture content within an original image $X$ by changing R, G and B values of corresponding pixels affected by said imprinting without changing the Y value of these pixels,
wherein the Y value of a pixel in said original image is the sum of weighted R, G and B values of that pixel using predetermined standard weight values $w_i$,
and wherein said Y, R, G and B values are normalised in a predetermined value range MIN...MAX, and the normalised red, green and blue values of said affected pixels are denoted for each pixel as $X'_r$, $X'_g$ and $X'_b$, respectively, in an image $X'$ which is initially a copy of image $X$,
and wherein $X''$ and $X'''$ are also copies of image $X$, and wherein said apparatus includes:

- calculation means (61, 621-624, 631, 632, 641, 642, 65, 661, 662, 67,681,682) which carry out for each affected pixel in images $X'$, $X''$ and $X'''$ the following processing:

(A) checking transfer from source $X'_g$ to destination $X'_b$;
(B) checking transfer from source $X'_g$ to destination $X'_r$;

(C) checking swap between $X'_r$ and $X'_b$ and, if possible, transfer from $X''_r$ to $X''_b$ and from $X'''_b$ to $X'''_r$ ;
(D) set $X' = X'' + X'''-X'$;
(E) mixing $X$ and $X'$ according to $M$ such that $Z = MX + (1 - M)X'$, wherein for each one of steps (A), (B) and (C) the following processing is carried out, where $i$ represents the source *colour, j* represents the destination colour, $i$ = R, G or B, $j$ = R, G or B, and $i \neq j$ :

(a) determining a destination spare capacity $sc_j = 1 - X'_j$ ;
(b) setting a weight ratio

$$wr = \frac{w_i}{w_j} \ ;$$

(c) setting a transfer value $tv = min(sc_j, X'_j)$ ;
(d) subtracting a weighted transfer value from the source by

$$X'_i = X'_i - \frac{tv}{wr} \ ;$$

(e) adding said transfer value $tv$ to the destination by $X'_j = X'_j + tv$.

9. Apparatus according to claim 7 or 8, wherein MIN=0 and MAX=1.

10. Apparatus according to one of claims 7 to 9, wherein said predetermined standard weight values $w_i$ are CCIR Rec.601 or CCIR Rec.709 weight values.

Proxy
2013-03-021
14:43:53:22

REEL A001                                                      Clip 01

**Fig. 1**

**Fig. 2**

**Fig. 3**

**Fig. 4**

**Fig. 5**

**Fig. 6**

Europäisches Patentamt
European Patent Office
Office européen des brevets

# EUROPEAN SEARCH REPORT

Application Number

EP 14 30 6757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/007935 A1 (REED ALASTAIR M [US] ET AL) 13 January 2011 (2011-01-13) | 1,6 | INV. G06T1/00 |
| A | * paragraphs [0009], [0046], [0079] - [0087] * | 2-5,7-10 | |
| X | US 2014/057676 A1 (LORD JOHN D [US] ET AL) 27 February 2014 (2014-02-27) | 1,6 | |
| A | * paragraphs [0113] - [0115], [0160] - [0161] * | 2-5,7-10 | |
| X | WO 2006/048368 A1 (EUROP CENTRAL BANK ECB [DE]; JORDAN FREDERIC [CH]; KUTTER MARTIN [CH];) 11 May 2006 (2006-05-11) | 1,6 | |
| A | * abstract * <br> * page 18, line 12 - line 26 * <br> * page 20, line 26 - page 21, line 10 * | 2-5,7-10 | |
| X | US 2012/284012 A1 (RODRIGUEZ TONY F [US] ET AL) 8 November 2012 (2012-11-08) | 1,6 | |
| A | * paragraphs [0272] - [0273], [0303] - [0308], [0492] - [0497], [0651] - [0653] * | 2-5,7-10 | TECHNICAL FIELDS SEARCHED (IPC) <br><br> G06T |
| X | WO 2012/164361 A1 (NDS LTD [GB]; GEYZEL ZEEV [IL]) 6 December 2012 (2012-12-06) | 1,6 | |
| A | * abstract * <br> * page 1, line 25 - page 4, line 5 * <br> * page 10, line 3 - page 11, line 26 * | 2-5,7-10 | |

The present search report has been drawn up for all claims

| Place of search | Date of completion of the search | Examiner |
|---|---|---|
| Munich | 19 May 2015 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 6757

This annex lists the patent family members relating to the patent documents cited in  the above-mentioned European search report.
The members are as contained in the European Patent Office EDP file on
The European Patent Office is in no way liable for these particulars which are merely given for the purpose of information.

19-05-2015

| Patent document cited in search report | | Publication date | Patent family member(s) | | Publication date |
|---|---|---|---|---|---|
| US 2011007935 | A1 | 13-01-2011 | NONE | | |
| US 2014057676 | A1 | 27-02-2014 | NONE | | |
| WO 2006048368 | A1 | 11-05-2006 | AT | 383624 T | 15-01-2008 |
| | | | AU | 2005300589 A1 | 11-05-2006 |
| | | | CA | 2597088 A1 | 11-05-2006 |
| | | | DE | 602005004263 T2 | 22-01-2009 |
| | | | DK | 1714246 T3 | 26-05-2008 |
| | | | EP | 1691539 A1 | 16-08-2006 |
| | | | EP | 1714246 A2 | 25-10-2006 |
| | | | ES | 2301067 T3 | 16-06-2008 |
| | | | JP | 5009169 B2 | 22-08-2012 |
| | | | JP | 2008530666 A | 07-08-2008 |
| | | | PT | 1714246 E | 18-04-2008 |
| | | | SI | 1714246 T1 | 30-06-2008 |
| | | | US | 2008159615 A1 | 03-07-2008 |
| | | | WO | 2006048368 A1 | 11-05-2006 |
| US 2012284012 | A1 | 08-11-2012 | NONE | | |
| WO 2012164361 | A1 | 06-12-2012 | US | 2013287369 A1 | 31-10-2013 |
| | | | WO | 2012164361 A1 | 06-12-2012 |